## Europäisches Patentamt
## European Patent Office
## Office européen des brevets

(19)

(11) Veröffentlichungsnummer: **0 368 922 B1**

(12) # EUROPÄISCHE PATENTSCHRIFT

(45) Veröffentlichungstag der Patentschrift:
**15.05.91 Patentblatt 91/20**

(51) Int. Cl.$^5$: **B60K 41/22, F16H 59/56**

(21) Anmeldenummer: **88907056.1**

(22) Anmeldetag: **30.06.88**

(86) Internationale Anmeldenummer:
**PCT/EP88/00578**

(87) Internationale Veröffentlichungsnummer:
**WO 89/00515 26.01.89 Gazette 89/03**

(54) **HILFSKRAFTBETÄTIGTE GANGSCHALTEINRICHTUNG.**

(30) Priorität: **22.07.87 DE 3724272**

(43) Veröffentlichungstag der Anmeldung:
**23.05.90 Patentblatt 90/21**

(45) Bekanntmachung des Hinweises auf die
Patenterteilung:
**15.05.91 Patentblatt 91/20**

(84) Benannte Vertragsstaaten:
**DE GB IT**

(56) Entgegenhaltungen:
**EP-A- 0 073 280**
**US-A- 4 517 646**

(73) Patentinhaber: **ZAHNRADFABRIK
FRIEDRICHSHAFEN AKTIENGESELLSCHAFT
Löwentaler Strasse 100 Postfach 2520
W-7990 Friedrichshafen 1 (DE)**

(72) Erfinder: **HORNEFFER, Franz
Schusterstrasse 30
W-7996 Meckenbeuren (DE)**

## Beschreibung

Die Erfindung betrifft eine hilfskraftbetätigte Gangschalteinrichtung für Kraftfahrzeuggetriebe nach dem Oberbegriff von Anspruch 1.

Solche Gangschalteinrichtungen, bei denen der Fahrer oder auch eine elektronische Einrichtung nur den Gang auswählt und die Schaltung im Getriebe selbst nicht mehr über ein Schaltgestänge direkt vom Fahrer, sondern von einer Hilfskraftbetätigungseinrichtung durchgeführt wird, sind in vielen Ausführungen bekannt, z.B.

- ZF-Typenblatt elektro-pneumatische Schaltung (ES) für Synchrongetriebe F 43546/RT 3430-885,
- ZF-Typenblatt automatisierte Vorwählschaltung (AVS) für Synchrongetriebe F 32437/RT 3431-885,
- elektronisch-pneumatische Schaltung-EPS Lastkraftwagen Daimler Benz Aktiengesellschaft, Best. -Nr. 6510302300 von 3.86,
- Scania – Leichter schalten mit Computer, Seite 4, Spalte 2, 2. Absatz.

Bei allen diesen Ausführungen erfolgt das Öffnen und Schließen der Kupplung und damit des Antriebsstranges zwischen Motor und Getriebe weiterhin über das Kupplungspedal durch den Fahrer. Während bei einer Gangschaltung über ein Schaltgestänge der Fahrer infolge des direkten Kontaktes mit den Schaltmitteln im Getriebe erkennt, wenn der Gang eingelegt ist, fehlt bei einer hilfskraftbetätigten Schaltung diese Information, die in Verbindung mit der Betätigung des Schalthebels und des Schaltgestänges entsteht. Zur zeitlich richtigen Bedienung der Kupplung, insbesondere zum Schließen der Kupplung nach vollzogener Schaltung im Getriebe, muß eine entsprechende Rückmeldung geschaffen werden, um möglichst schnell nach dem Abschluß des Schaltvorganges im Getriebe den über die Kupplung geöffneten Antriebsstrang wieder zu schließen.

Aus dem erstgenannten ZF-Typenblatt elektropneumatische Schaltung (ES) ist es bekannt, mit dem Hebel des Gangschalters den entsprechenden Gang anzusteuern. Gegen die Schaltbewegung wirkt dabei eine spürbare Rückstellkraft, die abgebaut wird, sobald der angesteuerte Gang im Getriebe eingeschaltet ist. Nun läßt sich der Hebel leicht in die Endstellung führen. Dies ist für den Fahrer gleichzeitig das Signal für das Wiedereinkuppeln.

Bei der automatisierten Vorwählschaltung (AVS), ZF-Typenblatt, erfolgt die Rückmeldung über den Vollzug der Schaltung akustisch über einen Summer, Seite 2, Spalte 2, 1. Absatz. Dies ist für den Fahrer gleichzeitig das Signal zum Wiedereinkuppeln. Nach dem EPS-Handbuch für Lastwagen der Daimler Benz Aktiengesellschaft, Seite 8, ist die die Schaltung erst vollzogen, wenn sich der Schalthebel von einer gesperrten Vorwählstellung aus weiterbewegen läßt nach der Position 2, die in jeder Schaltrichtung vorhanden ist. Erst wenn der eingeschaltete Gang im Display angezeigt wird, kann das Kupplungspedal und der Schalthebel wieder losgelassen werden.

Aus der Scania-Broschüre "Leichter Schalten mit Computern" ist auf Seite 4, 1. Absatz, erkennbar, daß ein Summton dem Fahrer signalisiert, wann der Schaltvorgang beendet ist und die Kupplung wieder losgelassen werden kann.

Die Verbindung der Rückmeldung für die durchgeführte Schaltung im Getriebe mit dem Hebel des Gangschalters gibt dem Fahrer zwar eine Information, die der von einer Gangschalteinrichtung mit einem Schaltgestänge am nächsten kommt. Sie ist aber an den Hebel des Gangschalters oder an einen vergleichbaren Gangschalthebel gebunden, wie die aufgezeigten Beispiele zeigen, und erfordert einen sehr hohen Bauaufwand.

Ein akustisches Signal ist zwar einfach zu realisieren, ist aber nicht sehr gut geeignet als Information für den Fahrer, wobei bei hoher Schalthäufigkeit solche Signale lästig sind.

Darüber hinaus werden akustische Signale als Warnsignale verwendet, während es sich bei der Rückmeldung der Schaltung im Getriebe bei einer über Hilfskraft durchgeführten Schaltung um eine ganz normale, aber notwendige Information handelt.

Es ist deshalb Aufgabe der Erfingung, in einer hilfskraftbetätigten Gangschalteinrichtung nach dem Oberbegriff von Anspruch 1 die Rückmeldung für die durchgeführte Schaltung im Getriebe weiter zu entwickeln, insbesondere soll diese Rückmeldung nicht an einen Gangwähl- oder Gangschalthebel gebunden und auch kein akustisches Signal sein.

Diese Aufgabe wird mit den kennzeichnenden Merkmalen von Anspruch 1 erfüllt.

Die Übertragung eines haptischen – fühlbaren – Signals im Zusammenhang mit einer erfolgten Schaltung im Getriebe auf das Kupplungspedal gibt dem Fahrer unverwechselbar die Information, daß er nun wieder einkuppeln kann. Das Signal fühlt er also an der Stelle, an der eine Betätigung erfolgen soll. Durch dieses fühlbare Signal wird der Fahrer nicht belästigt und auch nicht abgelenkt, wie es bei akustischen oder optischen Signalen möglich ist, und die Bindung an einen Gangwählhebel oder Gangschalthebel besteht auch nicht mehr, so daß die hilfskraftbetätigte Schalteinrichtung auch in Zusammenhang mit einer elektronischen Gangauswahl ohne manuelle Vorwahl in einfacher Weise eingesetzt werden kann.

Die Verwirklichung ist elektrisch in Verbindung mit z.B. einem Elektromagneten, aber auch elektropneumatisch oder elektro-hydraulisch in Verbindung mit einem Magnetventil möglich. Der Elektromagnet kann über ein kurzes Gestänge mit dem Kupplungspedal verbunden sein, aber auch direkt in der Trittplatte des Kupplungspedals angeordnet sein. Die Stärke des haptischen – fühlbaren – Signals ist in einfacher Weise über ein Potentiometer, mit dem die Spannung reguliert wird, einstellbar. Besonders günstig ist die Anordnung eines Signalgebers in Form eines Elektromagneten in Verbindung mit einem Druckkolben, der auf die Druckleitung zwischen einer Geberkolben-Zylindereinheit am Kupplungspedal und einer Nehmerkolben-Zylindereinheit an der Kupplung wirkt. Das erzeugte Drucksignal wird dabei über die Geberkolben-Zylindereinheit und das Gestänge auf das Kupplungspedal übertragen und ist am Fuß des Fahrers spürbar. Die Erzeugung des Signals kann auch über Druckmittel erfolgen, wobei z.B. ein elektro-pneumatisches 3/2-Wegeventil nach vollzogener Schaltung Druckluft von einer Druckmittelquelle definiert an einen Signalgeber freigibt, der über einen Differenzkolben einen Druckstoß erzeugt, welcher wieder über die Geberkolben-Zylindereinheit und ein Gestänge auf das Kupplungspedal übertragen wird.

Weitere Einzelheiten der Erfindung werden anhand von Zeichnungen und Ausführungbeispielen erläutert.

Es zeigen :

Fig. 1 einen Anschlußplan einer elektro-pneumatischen Schaltung,

Fig. 2 einen im Kupplungspedal angeordneten elektrischen Signalgeber,

Fig. 3 eine Hilfskraftbetätigungseinrichtung für eine Kupplung mit einem Elektromagneten und Druckkolben als Signalgeber,

Fig. 4 eine Hilfskraftbetätigungseinrichtung für eine Kupplung mit einem elektro-pneumatischen Ventil und einer Differenzkolbeneinheit als Signalgeber.

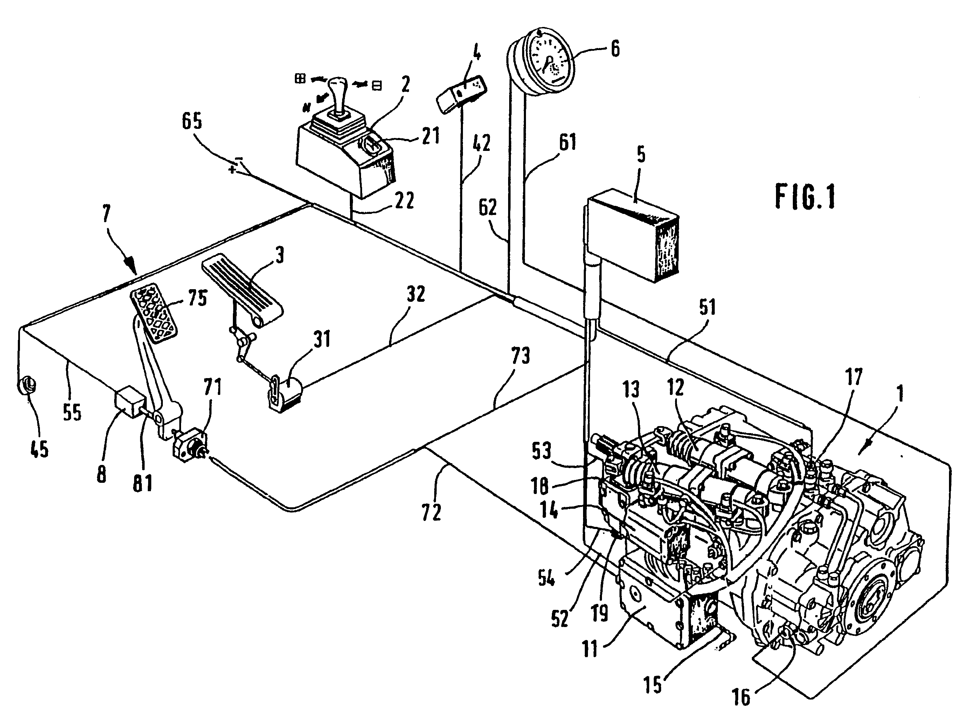

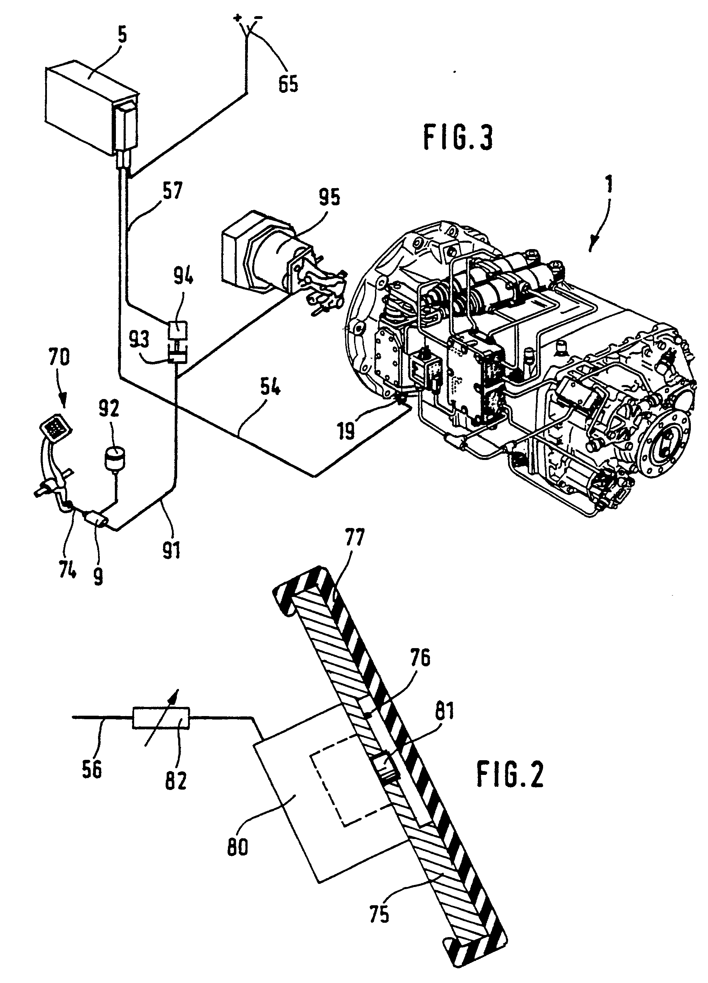

Im Anschlußplan für eine elektro-pneumatische Schaltungseinrichtung nach Fig. 1 ist ein Kraftfahrzeuggetriebe 1 mit einem Ventilblock 11 und drei Schaltzylindern 12, 13, 14 für z.B. drei Gassen von Gängen dargestellt. Dem Ventilblock wird in bekannter Weise über eine Leitung 15 Druckmittel, z.B. Druckluft, zugeleitet. Ein Gangschalter 2 mit Fahrbereichswähler 21, ein Gaspedal 3 mit Lastgeber 31 sowie eine optische Ganganzeige 4 sind über elektrische Leitungen 22, 32, 42 mit einem elektronischen Steuergerät 5 verbunden. Weiter ist ein elektronischer Tachograf 6 über Leitungen 61, 62 sowohl mit einem elektrischen Impulsgeber 16 am Getriebe 1, wie auch mit dem elektronischen Steuergerät 5 verbunden, und ein Kupplungspedal 7 hat über den Auslöseschalter 71 über die Leitung 72 eine Verbindung zum Ventilblock 11 und Leitung 73 zum elektrischen Steuergerät 5. Mit 65 sind der Anschluß an das elektrische Bordnetz und mit 45 ist ein Motorbremsschalter bezeichnet. Das elektronische Steuergerät 5 ist über Leitungen 51 mit dem elektronischen Induktivgeber 17, Leitung 52 mit dem Ventilblock 11, Leitung 53 mit dem Schalter für die Neutralstellung 18 und Leitung 54 mit dem Anzeigerschalter 19 für "Gang geschaltet". Am Kupplungspedal 7 ist noch ein Signalgeber 8 angeordnet, der ein elektrisches Signal vom Anzeigeschalter 19 am Getriebe 1 vorrangig über das elektronische Steuergerät 5 und Leitung 55 erhält und in ein haptisches Signal umwandelt, das am Kupplungspedal 7 vom Fahrer gespürt wird, wenn die Schaltung im Getriebe 1 vollzogen ist. Erst nach Wahrnehmung dieses Signals kann wieder eingekuppelt werden. Dieses Signal ersetzt die Information über die vollzogene Schaltung bei einer hilfskraftbetätigten Schalteinrichtung, die bei einer üblichen Handschalteinrichtung über das Schaltgestänge am Schalthebel spürbar ist oder z.B. über optische oder akustische Signale bei hilfskraftbetätigten Schalteinrichtungen den Fahrer über eine vollzogene Schaltung informiert. Ist, wie in dieser Fig. 1 dargestellt, der Signalgeber 8 ein Elektromagnet, wird das haptische Signal über den Anker 81 auf das Kupplungspedal 7 übertragen. Der Elektromagnet 80 kann aber auch, wie in Fig. 2 dargestellt, direkt in der Trittplatte 75 angeordnet sein, so daß der Anker 81 direkt oder über ein Übertragungsblech 76 das haptische Signal auf eine Fläche gibt, z.B. eine Gummiplatte oder ein Profilgummi 77, mit der die Trittplatte 65 überzogen ist. Da in diesem Zustand der noch nicht oder, wenn das Signal kommt, der gerade durchgeführten Schaltung im Getriebe der Fahrer das Kupplungspedal betätigt hält – Kupplung getreten – spürt er dieses Signal in einfacher Weise, ohne jede optische oder akustische Belästigung und kann das Kupplungspedal 7 zum Einkuppeln wieder freigeben. In der elektrischen Leitung 56 zum Elektromagneten 80 kann zur Einstellung der Spannung noch ein Potentiometer 82 angeordnet sein, weil damit das haptische Signal in seiner Stärke regulierbar ist.

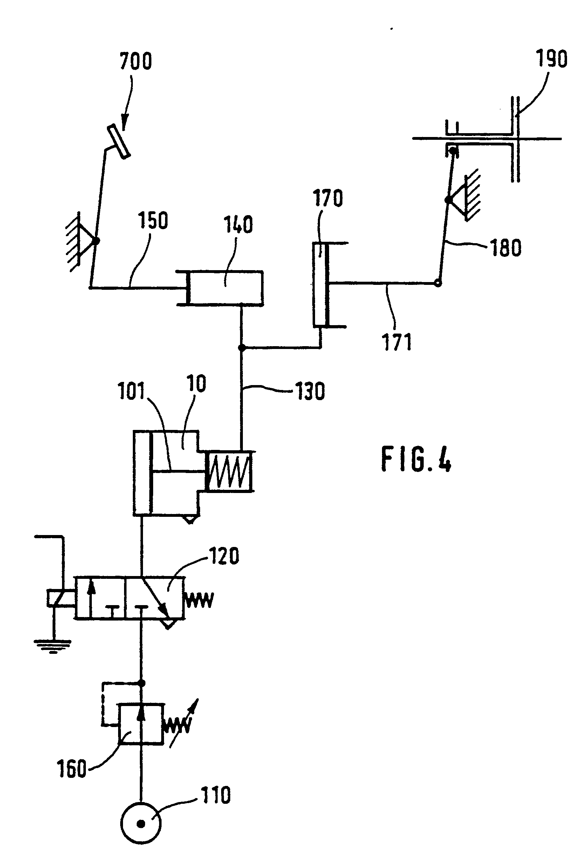

In Fig. 3 ist das Kupplungspedal 70 in Verbindung mit einer Geberkolben-Zylindereinheit 9, einer Druckmittelleitung 91 und einer Nehmerkolben-Zylindereinheit 95 dargestellt. Der Kolben der Nehmer-Zylindereinheif ist, wie aus Fig. 4 erkennbar, mit dem Kupplungsausrücker 180 der Kupplung 190 mechanisch verbunden und betätigt diese. Über einen Druckmittelbehälter 92 werden Druckmittelverluste ausgeglichen, und ein auf die Druckmittelleitung 91 wirkender Druckkolben 93 wird über einen Elektromagneten 94 betätigt und wirkt als Signalgeber für das haptische Signal. Während des Schaltvorganges im Getriebe 1 ist infolge des betätigten Kupplungspedals 70 die Kupplung geöffnet. Die Betätigung erfolgt dabei über das Kurze Gestänge 74, die Geberkolben-Zylindereinheit 9, das Druckmittel, z.B. Hydrauliköl in der Leitung 91, auf die Nehmerkolben-Zylindereinheit 95. Ist der vorgesehene Gang im Getriebe 1 eingelegt, wird vom Anzeigeschalter 19 "Gang geschaltet" über die Leitung 54 an das elektronische Steuergerät 5 gegeben und von diesem über die elektrische Leitung 57 der Elektromagnet 94 aktiviert. Über den Druckkolben 93 wird in der Leitung 91 ein Drucksignal erzeugt, das sich stoßartig oder auch in Intervallen über die Geberkolben-Zylindereinheit 9 und das Gestänge 74 auf das Kupplungspedal 70 fortsetzt. Der Fahrer spürt das Drucksignal am Fuß und kann, da die Schaltung im Getriebe vollzogen ist, das Kupplungspedal 70 entlasten. Die Fig. 4 zeigt eine Möglichkeit, insbesondere dann, wenn das Druckmittel für die Betätigung der Kupplung und der Gänge Luft ist, das am Kupplungspedal 700 wirkende haptische Signal über einen Signalgeber 10 in Verbindung mit einem elektro-pneumatischen 3/2-Wegeventil 120 zu erzeugen. Es wird, wie in Fig. 3 beschrieben, das 3/2-Wegeventil wie der Elektromagnet 94 nach dem Vollzug der Schaltung im Getriebe 1 aktiviert. Damit wird Druckmittel von einer Druckmittelquelle 110 über das geöffnete elektrische 3/2-Wegeventil 120 auf den Signalgeber 10 geleitet. Das eigentliche haptische Signal in der Druckleitung 130 wird über einen Differenzkolben 101 erzeugt und, wie in Fig. 3 beschrieben und über die Geberkolben-Zylindereinheit 140 und das Gestänge 150 auf das Kupplungspedal 700 übertragen. Zur Definierung des haptischen Signals kann noch ein Druckminderventil 160 angeordnet sein. Die Leitung 130 ist, wie in Fig. 3 beschrieben, mit der Betätigungskolben-Zylindereinheit 170 für die Kupplung 190 verbunden, wobei der Kolben 171 mit dem Kupplungsausrücker 180 verbunden ist.

## Ansprüche

1. Hilfskraftbetätigte Gangschalteinrichtung für ein Kraftfahrzeuggetriebe (1) mit einer Gangvorwahl und einem vom Fahrer über die Kupplungsbetätigung am Kupplungspedal (7, 70, 700) gesteuerten Gangwechsel, wobei dieser über ein Signal von der durchgeführten Schaltung im Getriebe (1) informiert wird, dadurch **gekennzeichnet**, daß dieses Signal ein am Kupplungspedal (7, 70, 700) wirkendes haptisches Signal ist.

2. Hilfskraftbetätigte Gangschalteinrichtung nach Anspruch 1, dadurch **gekennzeichnet**, daß im oder am Kupplungspedal (7) ein Signalgeber (8, 80) angeordnet ist.

3. Hilfskraftbetätigte Gangschalteinrichtung nach Anspruch 2, dadurch **gekennzeichnet**, daß ein elektrischer Signalgeber (8, 80) angeordnet ist.

4. Hilfskraftbetätigte Gangschalteinrichtung nach Anspruch 3, dadurch **gekennzeichnet**, daß in der Trittplatte (75) des Kupplungspedals (7) ein Elektromagnet (80) angeordnet ist und der Anker (81) des Elektromagneten (80) direkt oder über ein Übertragungsblech (76) auf eine Abdeckung (Profilgummi 77) wirkt, und so ein haptisches Signal für den Fahrer übertragen wird.

5. Hilfskraftbetätigte Gangschalteinrichtung nach Anspruch 4, dadurch **gekennzeichnet**, daß vor dem elektrischen Signalgeber, z.B. einem Elektromagneten (80, 94), ein Potentiometer (82) zur Regulierung des Signals angeordnet ist.

6. Hilfskraftbetätigte Gangschalteinrichtung nach Anspruch 1, dadurch **gekennzeichnet**, daß ein, auf die Druckleitung (91) zwischen der Geberkolben-Zylindereinheit (9) am Kupplungspedal (70) und der Nehmerkolben-Zylindereinheit (95) an der Kupplung (190) wirkender Druckkolben (93) in Verbindung mit einem Elektromagneten (94) als Signalgeber angeordnet ist, und das dadurch erzeugte Drucksignal (Druckstoß) sich über die Geberkolben-zylindereinheit (9) das Gestänge (74) auf das Kupplungspedal (70) als haptisches Signal fortsetzt.

7. Hilfskraftbetätigte Gangschalteinrichtung nach Anspruch 1, dadurch **gekennzeichnet**, daß in der Druckleitung (130) zwischen der Geberkolben-Zylindereinheit (140) dem Kupplungspedal (700) zugeordneten und der der Kupplung (190) zugeordneten Betätigungskolben-zylindereinheit (170) ein Signalgeber (10) angeordnet ist, der in Verbindung mit einem electro-pneumatischen Wegenventil (120) ein Drucksignal (Druckstoß) erzeugt, das sich über die Geberkolben-Zylindereinheit (140) und das Gestänge (150) auf das Kupplungspedal (700) als haptisches Signal fortsetzt.

8. Hilfskraftbetätigte Gangschalteinrichtung nach Anspruch 7, dadurch **gekennzeichnet**, daß zwischen der Druckmittelquelle (110) und dem elektro-pneumatischen Ventil (120) noch ein einstellbares Druckminderventil (160) angeordnet ist.

## Claims

1. Servo gearshift device for a motor vehicle gear box (1) with a gear preselection and a gear change which can be controlled by the driver via the clutch operation at the clutch pedal (7, 70, 700), the driver being informed of the completed gearshift in the gear box (1) by a signal, characterised in that this signal is a haptic signal acting on the clutch pedal (7, 70, 700).

2. Servo gearshift device according to claim 1, characterised in that a signal transmitter (8, 80) is provided in or on the clutch pedal (7).

3. Servo gearshift device according to claim 2, characterised in that an electrical signal transmitter (8, 80) is provided.

4. Servo gearshift device according to claim 3, characterised in that an electromagnet (80) is provided in the foot board (75) of the clutch pedal (7) and the armature (81) of the electromagnet (80) acts directly or via a transmission plate (76) on a cover (profiled rubber 77), so that a haptic signal is transmitted for the driver.

5. Servo gearshift device according to claim 4, characterised in that a potentiometer (82) is provided before the electrical signal transmitter, e.g. an electromagnet (80, 94), in order to adjust the signal.

6. Servo gearshift device according to claim 1, characterised in that a pressure piston (93) acting on the pressure line (91) between the master piston-cylinder unit (9) at the clutch pedal (70) and the slave piston-cylinder unit (95) at the clutch (190) is provided together with an electromagnet (94) as a signal transmitter, and the pressure signal (pressure surge) thus produced continues via the master piston-cylinder unit (9) and the rod linkage (74) to the clutch pedal (70) as a haptic signal.

7. Servo gearshift device according to claim 1, characterised in that a signal transmitter (10) is provided in the pressure line (130) between the master piston-cylinder unit (140), which is associated with the clutch pedal (700), and the operating piston-cylinder unit (170), which is associated with the clutch (190), which transmitter produces together with an electropneumatic directional valve (120) a pressure signal which continues via the master piston-cylinder unit (140) and the rod linkage (150) to the clutch pedal (700) as a haptic signal.

8. Servo gearshift device according to claim 7, characterised in that an adjustable pressure reducing valve (160) is also provided between the pressure medium source (110) and the electropneumatic valve (120).

## Revendications

1. Dispositif de changement de vitesses actionné par une force auxiliaire pour une boîte de vitesses de véhicule automobile (1) avec présélection de vitesses et passage de vitesses commandé par actionnement de l'embrayage par le conducteur au moyen de la pédale d'embrayage (7, 70, 700), sachant qu'un signal informe ce dernier que le changement de vitesses a été effectué dans la boîte (1), **caractérisé** en ce que ce signal est un signal tactile perçu sur la pédale d'embrayage (7, 70, 700).

2. Dispositif de changement de vitesses actionné par une force auxiliaire selon la revendication 1, **caractérisé** en ce qu'un émetteur (8, 80) est placé dans ou sur la pédale d'embrayage (7).

3. Dispositif de changement de vitesses actionné par une force auxiliaire selon la revendication 2, **caractérisé** en ce qu'il comprend un émetteur électrique (8, 80).

4. Dispositif de changement de vitesses actionné par une force auxiliaire selon la revendication 3, **caractérisé** en ce qu'un électro-aimant (80) est placé dans la plaque (75) de la pédale d'embrayage (7) et que l'induit (81) de l'électro-aimant (80) agit directement ou par l'intermédiaire d'une tôle de transmission (76) sur une couverture de protection (caoutchouc profilé 77) et qu'un signal tactile est ainsi transmis au conducteur.

5. Dispositif de changement de vitesses actionné par une une force auxiliaire selon la revendication 4, **caractérisé** en ce qu'un potentiomètre (82) servant à la régulation du signal est placé avant l'émetteur électrique, par ex. un électro-aimant (80, 94).

6. Dispositif de changement de vitesses actionné par une force auxiliaire selon la revendication 1, **caractérisé** en ce qu'il comprend un piston de pression (93) agissant sur la conduite de pression (91) entre l'unité formée par le piston-émetteur et le cylindre (9) sur la pédale d'embrayage (70) et l'unité formée par le piston récepteur et le cylindre (95) sur l'embrayage (190) et que, en liaison avec un électro-aimant (94), ce piston de pression (93) agit en tant qu' émetteur et que le signal de pression (poussée) ainsi produit se propage par l'unité formée par le piston-émetteur et le cylindre (9) ainsi que par la tringlerie (74) pour être transmis à la pédale d'embrayage (70) sous forme d'un signal tactile.

7. Dispositif de changement de vitesses actionné par une force auxiliaire selon la revendication 1, **caractérisé** en ce qu'il comprend un émetteur (10) placé dans la conduite de pression (130) entre l'unité formée par le piston-émetteur et le cylindre (140) et affectée à la pédale d'embrayage (700) et l'unité formée par le piston de commande et le cylindre (170) et affectée à l'embrayage (190) et que, en liaison avec un tiroir électropneumatique (120), cet émetteur (10) produit un signal de pression (poussée) qui se propage par l'unité formée par le piston-émetteur et le cylindre (140) ainsi que par la tringlerie (150) pour être transmis à la pédale d'embrayage (700) sous forme d'un signal tactile.

8. Dispositif de changement de vitesses actionné par une force auxiliaire selon la revendication 7, **caractérisé** en ce qu'il comprend en outre une soupape de réduction réglable (160) placée entre la source de pression (110) et la soupape électropneumatique (120).

FIG.1

FIG.3

FIG.2

700

190

150

140

170

180

171

101

10

130

FIG.4

120

160

110